(19) Europäisches Patentamt
European Patent Office
Office européen des brevets

(11) **EP 2 770 686 A1**

(12) **EUROPEAN PATENT APPLICATION**

(43) Date of publication:
**27.08.2014 Bulletin 2014/35**

(51) Int Cl.:
***H04L 27/26*** (2006.01)

(21) Application number: **13305199.5**

(22) Date of filing: **22.02.2013**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **ST-Ericsson SA**
**1228 Plan-les-Ouates (CH)**

(72) Inventor: **Dhayni, Achraf**
**06220 VALLAURIS (FR)**

(74) Representative: **Hirsch & Associés**
**58, avenue Marceau**
**75008 Paris (FR)**

(54) **Estimation of the cfo by transmission of a single-subcarrier signal in ofdm system**

(57)    A receiver for receiving and demodulating an OFDM signal received from an emitter (EMT), comprising receiving means adapted for demultiplexing said orthogonal frequency division multiplexing signal to generate time symbols ($y_1(n)$) and performing a time-to-frequency transform of these time symbols to generate received symbols (Y1(k)), further comprising carrier frequency offset estimation means adapted for
  - receiving a single-subcarrier signal ,

- down/up-converting the single-subcarrier signal by the interval $\Delta f$ between two subsequent frequencies of the sub-carriers of the OFDM signal,
- determining said estimated carrier frequency offset from the values of the received symbols; and
and carrier frequency offset compensation means for applying this estimated carrier frequency offset to the OFDM signal, so as to correct the carrier frequency of said received symbols.

EP 2 770 686 A1

**Description**

FIELD OF THE INVENTION

The invention relates to the field of multicarrier communications systems and more particularly to Orthogonal Frequency-Division Multiplexing (OFDM) systems, including wireless OFDM systems.

BACKGROUND OF THE INVENTION

Orthogonal Frequency-Division Multiplexing (OFDM), also referred to as "multicarrier modulation" (MCM) or "discrete multi-tone modulation" (DMTM), splits up and encodes high-speed incoming serial data, modulating it over a plurality of different carrier frequencies (called "subcarriers") within a communication channel to transmit the data from one user to another. The serial information is broken up into a plurality of sub-signals that are transmitted simultaneously over the subcarriers in parallel.

By spacing the subcarrier frequencies at intervals of the frequency of the symbols to transmit, the peak power of each modulated subcarrier lines up exactly with zero power components of the other modulated subcarriers, thereby providing orthogonality (independence and separability) of the individual subcarriers. This allows a good spectral efficiency (close to optimal) and minimal inter-channel interference (ICI), i.e. interferences between the subcarriers.

For these reasons, OFDM is used in many applications. Many digital transmission systems have adopted OFDM as the modulation technique such as digital broadcasting terrestrial TV (DVB-T), digital audio broadcasting (DAB), terrestrial integrated services digital broadcasting (ISDB-T), digital subscriber line (xDSL), WLAN systems, e.g. based on the IEEE 802.11 a/g standards, cable TV systems, etc.

However, the advantage of the OFDM can be useful only when the orthogonality is maintained. In case the orthogonality is not sufficiently warranted by any means, the performances of the OFDM system may be degraded due to intersymbol interference (ISI) and inter-carrier interference (ICI).

This could happen as a result of synchronization issues between the clocks of the emitter and of the receiver of the OFDM system. These issues comprise:

- Symbol Timing Offset (STO) and,
- Carrier Frequency Offset (CFO).

Carrier Frequency Offset is notably caused by the mismatch of the oscillators of the emitter and of the receiver of the OFDM system, the nonlinear characteristic of the wireless channel and the Doppler shift when the emitter and/or the receiver are moving.

Even small frequency offsets can dramatically harm the signal to noise ratio (SNR) and the bit-error rate (BER). In particular, OFDM systems employing time-domain differential demodulation are very sensitive to CFO.

Therefore, accurate CFO estimation and correction algorithms should be implemented so as to avoid performance degradation.

Several solutions have been proposed so far.

Several of these solutions are based on a split of the CFO between a Fractional Carrier Frequency Offset (FFO) and an Integer Carrier Frequency Offset (IFO). Each of these two parts can be addressed separately.

However, the proposed solutions are not entirely satisfactory and efficient. These solutions have one or several of the following drawbacks:

- Some techniques decrease the spectral efficiency by using dedicated transmitted data or sample sequences to train the CFO estimator at receiver's side. It is the case of many solutions based on pilot signals as for instance described in "Frequency Synchronization Algorithms for OFDM systems suitable for Communication over Frequency Selective Fading Channels" of Ferdinand Classen and Heinrich Meyr, In Proceedings of the Vehicular Technology Conference (VTC'97).
- Some techniques are not accurate enough.
- Some techniques require complex implementation.
- Some technique implies analog treatment, leading to important silicon overhead.
- Some techniques are not fully compliant with OFDM standards (like WLAN, LTE...)
- Some techniques are very dependent on the presence of inter-channel interferences (ICI). Such interferences may completely jeopardize the accuracy of the estimation of the CFO.
- Some techniques also suffer from multipath fading, which also may strongly harm the accuracy of the CFO estimation.

There is thus a need for a solution permitting to improve the situation by providing a better estimation of the CFO and more particularly of the Integer Carrier Frequency Offset (IFO) part..

SUMMARY OF THE INVENTION

A first aspect of the invention concerns a method for receiving and demodulating an orthogonal frequency division multiplexing signal received from an emitter (EMT) by a receiver (RCV), comprising demultiplexing said orthogonal frequency division multiplexing signal to generate time symbols ($y_1(n)$) and performing a time-to-frequency transform of said time symbols to generate received symbols ($Y_1(k)$).
Said method comprises determining an estimated carrier frequency offset by :

- receiving a single-subcarrier signal ,
- down/up-converting said single-subcarrier signal by the interval ($\Delta f$) between two subsequent frequencies of the sub-carriers of said orthogonal frequency division multiplexing signal,
- determining said estimated carrier frequency offset from the values of said received symbols; and

said method further comprising applying said estimated carrier frequency offset to said orthogonal frequency division multiplexing signal, so as to correct the carrier frequency of said received symbols.
According to embodiments of the invention, the method may comprise one or several of the following technical features:

- said estimated carrier frequency offset is applied by down/up-converting said orthogonal frequency division multiplexing signal according to said estimated carrier frequency offset, $\overline{CFO}$.
- said orthogonal frequency division multiplexing signal is multiplied by a complex sine signal of frequency equal *to* - $\overline{CFO}$.
- said determining an estimating carrier frequency offset is performed during reception of the preamble of an packet of said orthogonal frequency division multiplexing signal.
- said determining an estimating carrier frequency offset is repeated for the preambles of each packets constituting said orthogonal frequency division multiplexing signal.
- down/up-converting said single-subcarrier signal consists in multiplying said single-subcarrier signal by a complex sine signal of frequency equal to the interval ($\Delta f$) between two subsequent frequencies of the sub-carriers of said orthogonal frequency division multiplexing signal
- determining said estimated carrier frequency offset from the values of said received symbols consists in detecting the subcarrier frequency corresponding to a peak and determining the estimated CFO from this detection.
- after down/up-conversion, the phase of said single-subcarrier signal is amplified by a factor depending on a required precision.

Another aspect of the invention consists in a computer program product comprising a computer readable medium, having thereon a computer program comprising program instructions, the computer program being loadable into a data-processing unit and adapted to cause execution of the method described above when the computer program is run by the data-processing unit.
Another aspect of the invention consists in a receiver for receiving and demodulating an orthogonal frequency division multiplexing signal received from an emitter (EMT), comprising receiving means adapted for demultiplexing said orthogonal frequency division multiplexing signal to generate time symbols ($y_1(n)$) and performing a time-to-frequency transform of said time symbols to generate received symbols ($Y_1(k)$), further comprising

- carrier frequency offset estimation means adapted for

  - receiving a single-subcarrier signal ,
  - down/up-converting said single-subcarrier signal by the interval $\Delta f$ between two subsequent frequencies of the sub-carriers of said orthogonal frequency division multiplexing signal,
  - determining said estimated carrier frequency offset from the values of said received symbols; and

- and carrier frequency offset compensation means for applying said estimated carrier frequency offset to said orthogonal frequency division multiplexing signal, so as to correct the carrier frequency of said received symbols.

According to embodiments of the invention, the receiver may comprise one or several of the following technical features:

- said frequency offset compensation means are adapted to apply said estimated carrier frequency offset by down/up-converting said orthogonal frequency division multiplexing signal according to said estimated carrier frequency offset, $\overline{CFO}$.

- wherein said frequency offset estimation means are active for determining said estimating carrier frequency offset only during reception of the preamble of a packet of said orthogonal frequency division multiplexing signal.

- said frequency offset estimation means are adapted to multiply said single-subcarrier signal by a complex sine signal of frequency equal to the interval ($\Delta$f) between two subsequent frequencies of the sub-carriers of said orthogonal frequency division multiplexing signal

- said frequency offset estimation means are adapted to detect the subcarrier frequency corresponding to a peak and to determine said estimated CFO from this detection.

- said frequency offset estimation means comprise a phase amplifier (PA) for amplifying the phase of said single-subcarrier signal by a factor depending on a required precision.

Further features and advantages of embodiments of the invention will appear from the following description of some embodiments of the invention, given as nonlimiting examples, with reference to the accompanying drawings listed hereunder.

## BRIEF DESCRIPTION OF THE DRAWINGS

FIG. 1 illustrates a simplified and high-level block diagram of an OFDM system.
FIGS. 2a and 2b illustrate a simplified example of transmitted OFDM spectrum.
FIG. 3 illustrates an OFDM signal made of several packets according to an embodiment of the invention.

## DETAILED DESCRIPTION OF EMBODIMENTS OF THE INVENTION

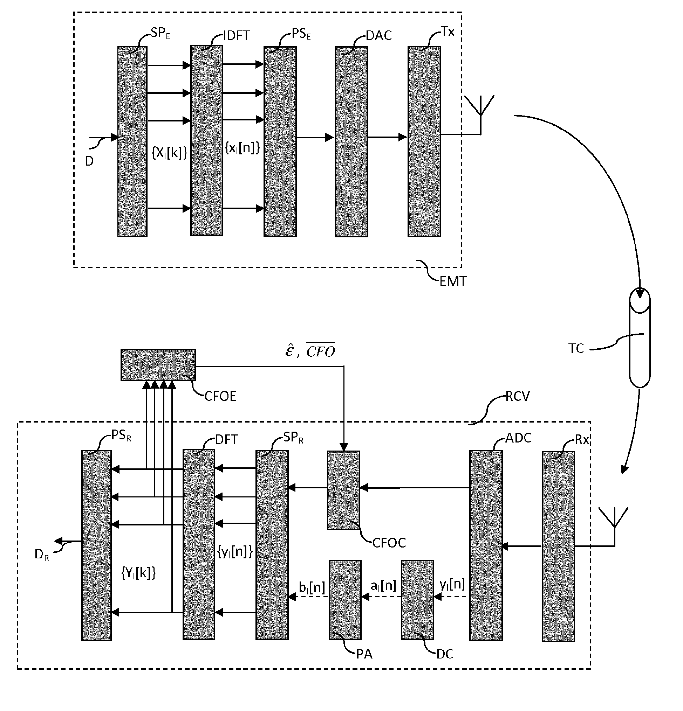

FIG.1 illustrates a simplified and high-level block diagram of an OFDM system comprising an emitter EMT and a receiver RCV connected by a communication channel TC. This communication channel is usually (but not necessarily) wireless and perturbed by noise.

The principle of this OFDM system consists in transmitting several symbols (or signal) in parallel by assigning to each of them a different subcarrier, each subcarrier being orthogonal to the others. The number of carriers (or sub-carriers) depends on the total bandwidth and on the duration of a symbol (i.e. the size of the time window in which the receiver can capture the transmitted symbols).

The data D to be transmitted, initially in the frequency domain, are transposed into the time domain and modulated for transmission over the communication channel TC. The receiver RCV transposes the received signals back to the frequency domain to extract the transmitted symbols.

More precisely, the data D to be transmitted at emitter EMT side are first appropriately encoded and then sent to a serial-to-parallel convertor $SP_E$. This function block aims in demultiplexing the data D into individual "streams" corresponding to the N subcarriers. Its output is a vector of frequency symbols $X_1[k]$, where "k" ranges from 1 to N-1 and "1" represents the ordinal number of the OFDM symbol to be transmitted.

Here and in the following descriptions, the variable k will be used for the frequency domain and the variable n for time domain.

In the figure 1, the curly brackets indicate a set of individual symbols associated with arrows. They are used to prevent having references for each arrow and helps simplifying and clarifying the figure 1.

This number N is equal to the number of subcarriers used for the transmission over the communication channel TC. It depends on the standard. For instance according to WLAN 802.11a (on which relies the embodiment depicted on figure 5a), 52 subcarriers are used (48 data subcarriers + 4 pilot subcarriers), and 12 (6 on the "left" and 6 on the "right") subcarriers are not used (zero subcarriers).

The symbols $\{X_1[k]\}$ which are outputted by the serial-to-parallel converter $SP_E$ are provided to a frequency-to-time transformer IDFT. This frequency-to-time transformer can perform an inverse discrete Fourier Transform of the symbols $\{X_1[k]\}$ to generate symbols $\{x_1[n]\}$ in the time domain. Traditionally symbols in the frequency domain are written in upper-case whereas symbols in the time domain are written in lower-case letters.

These symbols $\{x_1[n]\}$ are then multiplexed, or serialized, by the parallel-to-serial converter $PS_E$, converted from digital to analog by the DAC (Digital to Analog Convertor) and emitted over the communication channel TC, while constituting an OFDM signal, by the transmission interface Tx.

The communication channel TC can be associated with a transfer function $h_1(n)$. It represents the channel multipath behavior, delay and complex attenuation. The time domain transfer function $h_1(n)$ (also called channel impulse response as well) may vary over time (from one OFDM symbol to another) and is therefore indexed by the number 1 of the transmitted symbol. The time domain transfer function $h_1(n)$ represents a multipath channel model and is therefore indexed by the number n, n represents the time delay of each of the considered paths of the multipath model.

The multiplexer $PS_E$ modulates the orthogonal subcarriers by the symbols to be transmitted.

The transmitted OFDM symbol $x_1(n)$ signal spectrum is the sum in the frequency domain of the orthogonal subcarrier sinc functions that are superposed over each other. The individual symbols can be independently modulated by using different types of modulations techniques, like for instance QAM (Quadrature Amplitude Modulation) or PSK (Phase-Shift Keying).

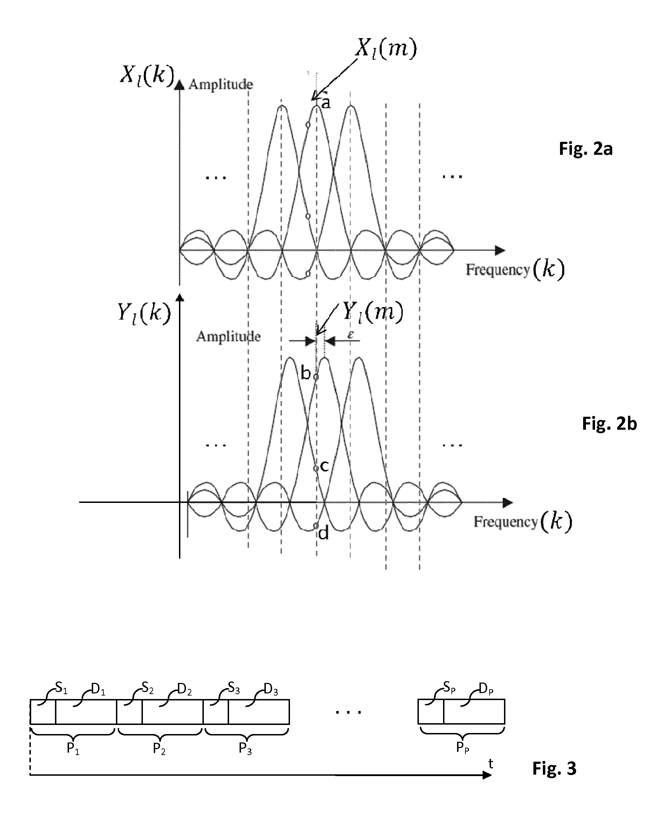

FIG. 2a and 2b illustrate a simplified example of such a transmitted OFDM spectrum at the emitter's side (FIG. 4a) and at receiver's side (FIG. 4b) according to the prior art. These explanations aim at better understanding the problem solved by the invention.

In this simplified example, only 3 subcarriers are depicted in order to keep the figure easy to read. Each subcarrier corresponds to a sinc function which peak matches with a frequency bin associated with an orthogonal modulation frequency. The frequency bins are depicted with vertical dotted lines. The sinc function is defined as $sinc(x)=sin(\pi.x)/\pi.x$ (in its normalized format).

Taking the example of WLAN 802.11 a/g, the frequency bins are located at -26*312.5 kHz, -25*312.5 kHz..., 25*312.5 kHz, 26*312.5 kHz. (the 0*312.5kHz subcarrier is not used). The interval (noted $\Delta f$ below) in frequency (in hertz) between two successive subcarriers' frequencies is equal to 312.5 kHz.

In the figure 2a, the symbol $X_1(m)$ corresponds to a value "a" which is at the peak of the corresponding subcarriers and thus independent of the other subcarriers.

In the figure 2b, the subcarriers are shifted by a carrier frequency offset (CFO) $\varepsilon$ in the frequency domain. As a consequence, the peaks of the sinc functions do not match anymore the frequency bins. The received symbol $Y_1(m)$ is not equal to "a" anymore. Instead, the received signal is the addition of the values of the subcarriers, so as $Y_1(m)=b+c+d$. In other words, the received signal depends on the other subcarriers (c, d). The orthogonality of the subcarriers is violated, due to the presence of the carrier frequency offset $\varepsilon$; and the received and decoded symbols are in error. This is in fact mainly due to the Fractional Carrier Frequency Offset (FFO).

In conclusion, the two parts of the Carrier frequency offset (CFO) have distinct main impacts:

- The Integer Carrier Frequency Offset (IFO) $\varepsilon_I$ shifts the received OFDM signal in the frequency domain.
- The Fractional Carrier Frequency Offset (FFO) $\varepsilon_F$ impacts dramatically the orthogonality of the received OFDM signal and jeopardizes its decoding.

According to the invention, a CFO compensation is put in place, both for the IFO and for the FFO, so as to determine the right values of the received symbols.

$\varepsilon$ is a normalized value for the carrier frequency offset CFO. It is often preferred to express the CFO as a frequency, so that CFO$=\varepsilon.\Delta f$ (in Hertz).

The symbols $y_1(n)$ are received by the receiver RCV with, potentially such a CFO. The CFO can be positive or negative. No information can be determined by the receiver RCV about the nature of the transmission channel to help valuing the CFO. In other words, at the moment of CFO estimation, we do not have information about the transfer function of the channel. Therefore, the receiver RCV should rely on blind determination techniques to compensate the effects of the Carrier Frequency Offset.

The received symbols can be expressed with the typical following equation:

$$y_l[n] = \frac{1}{N}\sum_{k=0}^{N-1} H_l[k] X_l[k] e^{j2\pi(k+\varepsilon)\left(n/N\right)} + z_l[n]$$

Where:

- n, k represent variable over the time and frequency domains respectively.
- $H_1$ is the channel transfer function during the 1th symbol.
- N is the number of subcarriers (which depends on the standard that is used).
- $z_1$ is the time domain additive noise of the channel during the transmission of the 1th symbol.

$k+\varepsilon$ corresponds to the frequency shifted by the carrier frequency offset $\varepsilon$.

The estimation of the CFO is not a straightforward process.

Its impact on the received signal can be expressed by taking the DFT (Discrete Frequency Transform) of the previous equation. We then get:

$$Y_l[k] = \frac{\sin(\pi\varepsilon_F)}{N \cdot \sin(\pi\varepsilon_F / N)} \cdot e^{j2\pi\varepsilon_F\left(N-\frac{1}{N}\right)} \cdot H_l[k] \cdot X_l[k] + L_l(k) + Z_l[k]$$

Where

$$L_l[k] = e^{j2\pi\varepsilon_F\left(N-\frac{1}{N}\right)} \cdot \sum_{m=0, m\neq k}^{N-1} \frac{\sin(\pi(m-k+\varepsilon_F))}{N \cdot \sin(\pi(m-k+\varepsilon_F)/N)} \cdot H_l[m] X_l[m] \cdot e^{j2\pi(m-k)\left(N-\frac{1}{N}\right)}$$

The first tem of the equation represents the amplitude and phase distortion of the $k^{th}$ subcarrier frequency component due to the fractional carrier frequency offset (FFO).

The $L_1(k)$ term expresses the distortion due to the inter-channel interference (ICI) from other subcarriers into the $k^{th}$ subcarrier frequency component. As already said, the presence of such a term implies that the orthogonality among subcarrier frequency components is not maintained any longer.

It appears from these two equations that it is in practice impossible to determine directly the Carrier Frequency Offset CFO.

The receiver RCV comprises functions for generating received data $D_R$ from the OFDM signal received over the communication channel TC. These received data $D_R$ are normally a copy of the data D processed and sent by the emitter EMT. The received data $D_R$ (=D) can then be passed over to other circuitry of the receiver RCV (not depicted, since not related to the invention).

These receiving functions of the receiver may perform different steps which are usual in OFDM systems but may be subject to variations and different implementations. Not all the functions are depicted but only those which are either related to the present invention or needed for understating the context in which it is embedded. For instance, the receiving functions may further comprise a demapper, a bit desinterleaver, FEC decoding, channel equalizer, a demodulator, etc.

The high-level schema of the figure 1 shows a possible implementation where the receiving function module RFM comprises:

- a receiving interface Rx for receiving the OFDM signal from the communication channel TC;
- a serial-to-parallel convertor or demultiplexer $SP_R$, which parallelizes the received symbol to a set of time symbols $\{y_1(n)\}$.
- A time-to-frequency transformer DFT. This transformer can perform a discrete Fourier Transform of the time symbols $\{y_1(n)\}$ to generate a set of received frequency values $\{Y_1(k)\}$ in the frequency domain, corresponding to determined subcarriers.
- A parallel-to-serial converter $PS_R$ to produce received data $D_R$ made of these received frequency values $\{Y_1(k)\}$.

In order to perform these steps, the receiver RCV shares with the emitter EMT the same subcarriers frequencies, as well as the number of subcarriers N. They could have been communicated beforehand, or they may be set or tuned previously in both the emitter and receiver, for instance according to standards specifications.

The receiver RCV further comprises CFO estimation means and CFO compensation means.

A single-subcarrier OFDM signal is received from the emitter EMT, for the purpose of estimating the CFO.

On FIG. 1, the dotted lines represent the track followed by the OFDM signal in the CFO estimation phase, i.e. during the reception of the single-subcarrier signal and the determination of the CFO estimation.

When this CFO estimation phase is over, the receiver RCV may enter and CFO compensation phase wherein the OFDM signal is compensated thanks to this CFO estimation. The track followed by these "normal" OFDM signal is depicted in plain lines. During this CFO compensation phase, the CFO estimation means are not used and may be turned inactive.

According to an embodiment of the invention, the determination of an estimated CFO is performed during the reception of the preambles of the packets of the OFD signal. Accordingly, the single-subcarrier OFDM signal is part of a preamble and the CFO estimation means can be active only during the reception of the preambles.

FIG. 3 illustrates an OFDM signal constituted by packets, $P_1$, $P_2$, $P_3$...$P_P$.

Each packet is composed of two parts:

- The preambles $S_1, S_2, S_3...S_P$: to be used by the receiver for frame detection, time and frequency synchronization, automatic gain control, channel estimation, etc. It is often considered that several preambles may exist, but we will put them together under the term "preamble" here without entering further into details.
- A data signal $D_1, D_2, D_3...D_P$., which should be here understood as the part of the OFDM signal that can comprise "real" data (i.e. payload, transporting higher-level datagrams), but also CRC (cyclic redundancy check) codes, etc.

Further information can be found in the OFDM literature, especially in 3GPP standardization documentations.

The CFO may be estimated during the reception of a preamble and the estimated CFO may be used to compensate the actual CFO, as it will be seen later on, during reception of the following data and packets.

According to an embodiment of the invention, the CFO estimation is repeated for the preambles of each packet constituting the orthogonal frequency division multiplexing signal. The estimated CFO can then be used to the subsequent data signal only. For instance, a first estimated CFO can be determined while receiving the preamble $P_1$ and this estimation can be used to compensate for the CFO during the reception of the data signal $D_1$, then a second estimated CFO can be determined while receiving the preamble $P_2$ and this second estimation can be used to compensate for the CFO during the reception of the data signal $D_2$, etc.

The single-subcarrier signal is an OFDM signal for which only one subcarrier is associated with a non-null value.

In other words, in the frequency domain at the input of the frequency-to-time transformer IDFT of the emitter EMT, we have:

$$X_l(k) = V \ \text{for} \ k = m$$

$$X_l(k) = 0 \ \text{for} \ k \neq m$$

where V is the non-null value. This value can be arbitrary chosen and can be a complex value, i.e. being characterized by an amplitude and a phase.

Using a single subcarrier implies that even in the presence of a fractional carrier frequency offset, no inter-channel interference (ICI) is created since there is only one channel that is used.

At the output of the frequency-to-time transformer IDFT, the signal is:

$$x_l(n) = e^{2\pi j \cdot \Delta f \cdot t} \ ,$$

within one OFDM period of $1/\Delta f$.

$\Delta f$ represents the interval in frequency (in hertz) between two successive subcarriers' frequencies. It is for instance the interval between two successive peaks on the figures 2a and 2b. In the case of WLAN 802.11 a/g, this interval $\Delta f$ is equal to 312.5 kHz.

This single-subcarrier signal is transmitted over the communication channel TC and received by the receiver RCV. Before its treatment by the time-to-frequency transformer DFT, it can then be expressed as:

$$y_l(n) = e^{2\pi j \cdot (\Delta f + CFO) t} \ ,$$

within one OFDM period of $1/\Delta f$

Wherein CFO represents the carrier frequency offset expressed in hertz so as CFO $= \varepsilon . \Delta f$, $\varepsilon$ being the normalized carrier frequency offset (no unit).

The CFO estimation means comprise a down/up converter DC. This converter is adapted to convert the received signal by $\Delta f$, down or up according to the sign of $\Delta f$ This conversion may take place after the conversion of the received signal from analog to digital by the analog-to-digital ADC.

The down/up conversion can be performed by multiplying the complex values $y_1(n)$ by a complex sine signal s(n) of frequency $-\Delta f$, i.e. $s(n) = e^{2\pi j \cdot (-\Delta f) \cdot t}$.

At the output of the down/up converter DC, the signal $a_1(n)$ can then be written as:

$$a_l(n) = y_l(n) \times s(n)$$

$$\Rightarrow \quad a_l(n) = e^{2\pi j \cdot (\Delta f + CFO) \cdot t} \times e^{2\pi j \cdot (-\Delta f) \cdot t}$$

$$\Rightarrow \quad a_l(n) = e^{2\pi j \cdot CFO \cdot t}$$

Therefore the signal $a_1(n)$ at the output of the down/up converter DC is a sine signal at the frequency of the CFO.

Accordingly, estimating the CFO can be done by determining the frequency of the signal $a_1(n)$.

This can be done by switching to the frequency domain. The signal can be directed to the time-to-frequency transformer DFT for transforming the time symbols $a_1(n)$ and generating corresponding received symbols $Y_1(k)$. An estimated carrier frequency offset can then be determined from the values of the received symbols by a CFO estimator, CFOE. The CFO estimator CFOE can output it in the form of an estimated normalized carrier frequency offset $\hat{\varepsilon}$ or in the form of an estimated carrier frequency offset expressed as a frequency in Hertz $\overline{CFO}$. This output is then provided to CFO compensation means, CFOC.

However, according to an embodiment of the invention, the signal $a_1(n)$ is firstly provided to a phase amplifier PA before being inputted to the time-to-frequency transformer DFT.

The magnitude of the frequency interval $\Delta f$ between two subsequent frequencies of the sub-carriers is usually larger than the required precision for the estimated carrier frequency offset. Therefore, in order to get a precision accurate enough, the phase of the complex signal $a_1(n)$ is amplified by a factor A which depends on the required precision. This factor may for instance be equal to 1000.

At the output of the phase amplifier PA, the signal $b_1(n)$ is equal to:

$$b_l(n) = e^{2\pi j \cdot (CFO \times A) \cdot t} = e^{2\pi j \cdot \Delta f \cdot (\varepsilon \times A) \cdot t}$$

The phase-amplified signal $b_1(n)$ is then provided to the serial-to-parallel converter $SP_R$ and to the time-to-frequency transformer DFT, as a "normal signal" $y_1(n)$.

As earlier explained, the output of the time-to-frequency transformer DFT represents received symbols. This output is also provided to the CFO estimator CFOE which can determine an estimated carrier frequency offset from the values of these received symbols. Due to the nature of the signal $b_1(n)$, these values are representative of an emitted single-carrier signal and therefore form a frequency peak. The CFO estimator CFOE can then detect the subcarrier frequency corresponding to this peak and determine the estimated CFO from this detection.

For instance, if the amplification factor A=1000, the CFO estimator CFOE can implement simple tests like:

- If a peak is detected at subcarrier number 0, then $\hat{\varepsilon}$ =0
- If a peak is detected at subcarrier number 1, then $\hat{\varepsilon}$ =0.001
- If a peak is detected at subcarrier number 2, then $\hat{\varepsilon}$ =0.002
- If a peak is detected at subcarrier number 3, then $\hat{\varepsilon}$ =0.003
- And so on...
  And similarly
- If a peak is detected at subcarrier number -1, then $\hat{\varepsilon}$ =-0.001
- If a peak is detected at subcarrier number -2, then $\hat{\varepsilon}$ =-0.002
- If a peak is detected at subcarrier number -3, then $\hat{\varepsilon}$ =-0.003
- And so on...

Or, more generally, if a peak is detected at subcarrier number k, then $\hat{\varepsilon}$ =k*0.001

The estimated CFO can then be provided to the CFO estimator CFOE, which apply this estimated carrier frequency offset to the orthogonal frequency division multiplexing signal, so as to correct the carrier frequency of the received symbols $Y_1(n)$.

This can be done by down or up-converting the signal $y_1(n)$ at the output of the analog-to-digital convertor ADC by the estimated carrier frequency offset. The down/up conversion can be performed by multiplying the complex values $y_1(n)$ by a complex sine signal $s_2(n)$ of frequency - $\overline{CFO}$, i.e. $s(n) = e^{2\pi j \cdot (\overline{CFO}) \cdot t}$.

The resulting signal $c_1(n)$ can then be written

$$c_l(n) = y_l(n) \times s2(n)$$

$$\Rightarrow \quad c_l(n) = e^{2\pi j \cdot (\Delta f + CFO) \cdot t} \times e^{2\pi j \cdot \overline{(CFO)} t}$$

$$\Rightarrow \quad c_l(n) = e^{2\pi j \cdot \Delta f \cdot t} \times e^{2\pi j \cdot (CFO - \overline{CFO}) t}$$

$$\Rightarrow \quad c_l(n) = x_l(n) \times e^{2\pi j \cdot (CFO - \overline{CFO}) t}$$

Accordingly, the better is the accuracy of the estimated CFO, the closer to 1 is the last term, so that the carrier frequency offset is removed. According to the invention, this accuracy can be tuned by setting the phase amplification A to the appropriate value, so as this term can be negligible: $CFO - \overline{CFO} = 0$

The compensated signal $c_1(n)$ is then provided to the serial-to-parallel converter $SP_R$ and to the time-to-frequency transformer DFT. The received symbols $Y_1(k)$ are then purged from any carrier frequency offset and their carrier frequency is then corrected.

This correction can be achieved thanks to the invention.

Among advantages of the invention, one can mention its robustness, e.g. its independency of ICI and multipath fading. Thanks to the concept of transmitting a single-subcarrier signal from emitter to receiver for estimating the CFO, no ICI can happen during the estimation phase. Moreover, a single-subcarrier signal can be considered as narrow-band enough to avoid any distortion due to multi-path fading.

In addition, the accuracy of the estimated CFO is excellent compared with other techniques known in the art, as it has been shown by simulation and mathematical demonstrations.

Furthermore, this technique makes use of existing circuitry of the emitter and receiver, so that no analog silicon overhead is needed. Some treatments in the digital area require digital silicon overhead but it is kept in a very acceptable level.

Moreover, this technique does not decrease the spectral efficiency at all.

The invention has been described with reference to preferred embodiments; but other embodiments and variations are possible while being within the scope of the claimed invention.

## Claims

1.  A method for receiving and demodulating an orthogonal frequency division multiplexing signal received from an emitter (EMT) by a receiver (RCV), comprising demultiplexing said orthogonal frequency division multiplexing signal to generate time symbols ($y_1(n)$) and performing a time-to-frequency transform of said time symbols to generate received symbols ($Y_1(k)$), said method comprising determining an estimated carrier frequency offset by

    - receiving a single-subcarrier signal ,
    - down/up-converting said single-subcarrier signal by the interval ($\Delta f$) between two subsequent frequencies of the sub-carriers of said orthogonal frequency division multiplexing signal,
    - determining said estimated carrier frequency offset from the values of said received symbols; and
    said method further comprising applying said estimated carrier frequency offset to said orthogonal frequency division multiplexing signal, so as to correct the carrier frequency of said received symbols.

2.  The method according to claim 1, wherein said estimated carrier frequency offset is applied by down/up-converting said orthogonal frequency division multiplexing signal according to said estimated carrier frequency offset, $\overline{CFO}$.

3.  The method according to claim 2, wherein said orthogonal frequency division multiplexing signal is multiplied by a complex sine signal of frequency equal to - $\overline{CFO}$.

4.  The method according to any of claims 1 to 3, wherein said determining an estimating carrier frequency offset is performed during reception of the preamble of an packet of said orthogonal frequency division multiplexing signal.

5.  The method according to claim 4 wherein said determining an estimating carrier frequency offset is repeated for the preambles of each packets constituting said orthogonal frequency division multiplexing signal.

6. The method according to any of the previous claims, wherein down/up-converting said single-subcarrier signal consists in multiplying said single-subcarrier signal by a complex sine signal of frequency equal to the interval ($\Delta$f) between two subsequent frequencies of the sub-carriers of said orthogonal frequency division multiplexing signal

7. The method according to any of the previous claims wherein determining said estimated carrier frequency offset from the values of said received symbols consists in detecting the subcarrier frequency corresponding to a peak and determining the estimated CFO from this detection.

8. The method according to any of the previous claims wherein after down/up-conversion, the phase of said single-subcarrier signal is amplified by a factor depending on a required precision.

9. A computer program product comprising a computer readable medium, having thereon a computer program comprising program instructions, the computer program being loadable into a data-processing unit and adapted to cause execution of the method according to any of claims 1 to 8 when the computer program is run by the data-processing unit.

10. A receiver for receiving and demodulating an orthogonal frequency division multiplexing signal received from an emitter (EMT), comprising receiving means adapted for demultiplexing said orthogonal frequency division multiplexing signal to generate time symbols ($y_1(n)$) and performing a time-to-frequency transform of said time symbols to generate received symbols ($Y_1(k)$), further comprising carrier frequency offset estimation means adapted for

   - receiving a single-subcarrier signal ,
   - down/up-converting said single-subcarrier signal by the interval $\Delta$f between two subsequent frequencies of the sub-carriers of said orthogonal frequency division multiplexing signal,
   - determining said estimated carrier frequency offset from the values of said received symbols; and
   and carrier frequency offset compensation means for applying said estimated carrier frequency offset to said orthogonal frequency division multiplexing signal, so as to correct the carrier frequency of said received symbols.

11. The receiver according to claim 10, wherein said frequency offset compensation means are adapted to apply said estimated carrier frequency offset by down/up-converting said orthogonal frequency division multiplexing signal according to said estimated carrier frequency offset, $\overline{CFO}$.

12. The receiver according to claim 10 or 11, wherein said frequency offset estimation means are active for determining said estimating carrier frequency offset only during reception of the preamble of a packet of said orthogonal frequency division multiplexing signal.

13. The receiver according to any of the claims 10 to 12, wherein said frequency offset estimation means are adapted to multiply said single-subcarrier signal by a complex sine signal of frequency equal to the interval ($\Delta$f) between two subsequent frequencies of the sub-carriers of said orthogonal frequency division multiplexing signal

14. The receiver according to any of the claims 10 to 13, wherein said frequency offset estimation means are adapted to detect the subcarrier frequency corresponding to a peak and to determine said estimated CFO from this detection.

15. The receiver according to any of the claims 10 to 14, wherein said frequency offset estimation means comprise a phase amplifier (PA) for amplifying the phase of said single-subcarrier signal by a factor depending on a required precision.

Fig. 2a

Fig. 2b

Fig. 3

Europäisches
Patentamt

European
Patent Office

Office européen
des brevets

**EUROPEAN SEARCH REPORT**

Application Number

EP 13 30 5199

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2004/120410 A1 (PRIOTTI PAOLO [JP]) 24 June 2004 (2004-06-24) * paragraph [[0016]] - paragraph [[0027]] * * paragraph [[0044]] - paragraph [[0045]] * * paragraph [[0049]] - paragraph [[0050]] * * paragraph [[0056]] - paragraph [[0057]] * ----- | 1-14 | INV. H04L27/26 |
| A | EP 1 220 505 A2 (SAMSUNG ELECTRONICS CO LTD [KR]) 3 July 2002 (2002-07-03) * paragraph [[0004]] * ----- | 7,14 | |

TECHNICAL FIELDS SEARCHED (IPC)

H04L

The present search report has been drawn up for all claims

| Place of search | Date of completion of the search | Examiner |
|---|---|---|
| Berlin | 4 June 2013 | Douglas, Ian |

EPO FORM 1503 03.82 (P04C01)

**ANNEX TO THE EUROPEAN SEARCH REPORT
ON EUROPEAN PATENT APPLICATION NO.**                    EP 13 30 5199

This annex lists the patent family members relating to the patent documents cited in the above-mentioned European search report.
The members are as contained in the European Patent Office EDP file on
The European Patent Office is in no way liable for these particulars which are merely given for the purpose of information.

04-06-2013

| Patent document cited in search report | | Publication date | Patent family member(s) | | Publication date |
|---|---|---|---|---|---|
| US 2004120410 | A1 | 24-06-2004 | AU | 2003297345 A1 | 22-07-2004 |
| | | | CN | 1748397 A | 15-03-2006 |
| | | | EP | 1573997 A1 | 14-09-2005 |
| | | | JP | 4162248 B2 | 08-10-2008 |
| | | | JP | 2006512032 A | 06-04-2006 |
| | | | KR | 20050089840 A | 08-09-2005 |
| | | | RU | 2303856 C2 | 27-07-2007 |
| | | | UA | 82209 C2 | 25-03-2008 |
| | | | US | 2004120410 A1 | 24-06-2004 |
| | | | WO | 2004059936 A1 | 15-07-2004 |
| EP 1220505 | A2 | 03-07-2002 | CN | 1361519 A | 31-07-2002 |
| | | | EP | 1220505 A2 | 03-07-2002 |
| | | | JP | 3583391 B2 | 04-11-2004 |
| | | | JP | 2002217865 A | 02-08-2002 |
| | | | KR | 20020056807 A | 10-07-2002 |
| | | | US | 2002126618 A1 | 12-09-2002 |